# EUROPÄISCHE PATENTSCHRIFT

(11) **EP 3 743 608 B1**
(45) Veröffentlichungstag und Bekanntmachung des Hinweises auf die Patenterteilung: **09.03.2022**
(21) Anmeldenummer: 18808280.4
(22) Anmeldetag: 21.11.2018
(51) Int. Cl.: F02B 39/00, F02B 37/04, F02B 37/16, F02B 39/10, F01D 25/12, F04D 29/58, H02K 1/32, H02K 9/10, H01M 8/04, F02B 39/16

(54) **TURBOMASCHINE, INSBESONDERE FÜR EIN BRENNSTOFFZELLENSYSTEM, BRENNSTOFFZELLENSYSTEM, VERFAHREN ZUM BETRIEB EINER TURBOMASCHINE UND VERFAHREN ZUM BETRIEB EINES BRENNSTOFFZELLENSYSTEMS**
TURBOMACHINE, IN PARTICULAR FOR A FUEL CELL SYSTEM, FUEL CELL SYSTEM, METHOD FOR OPERATING A TURBOMACHINE AND METHOD FOR OPERATING A FUEL CELL SYSTEM
TURBOMACHINE, EN PARTICULIER POUR UN SYSTÈME DE PILES À COMBUSTIBLE, SYSTÈME DE PILES À COMBUSTIBLE, PROCÉDÉ DE FONCTIONNEMENT D'UNE TURBOMACHINE ET PROCÉDÉ DE FONCTIONNEMENT DE SYSTÈME DE PILES À COMBUSTIBLE

(30) Priorität: 25.01.2018 DE 102018201162
(43) Veröffentlichungstag der Anmeldung: 02.12.2020
(73) Patentinhaber: Robert Bosch GmbH, 70442 Stuttgart (DE)
(72) Erfinder: WENGERT, Andreas, 71549 Auenwald (DE); OTT, Tobias Reinhard, 70563 Stuttgart (DE)
(86) Internationale Anmeldenummer: PCT/EP2018/082047
(87) Internationale Veröffentlichungsnummer: WO 2019/145065

(56) Entgegenhaltungen:
- EP-A1- 1 809 875
- EP-A1- 3 244 033
- DE-A1-102012 221 303
- DE-A1-102012 224 052
- DE-A1-102014 224 774
- DE-A1-102015 210 574
- US-A- 5 904 471
- US-A1- 2007 172 363
- US-A1- 2012 107 105
- US-B1- 6 246 138

## Beschreibung

### Stand der Technik

Die Erfindung betrifft eine Turbomaschine, insbesondere für ein Brennstoffzellensystem, ein Brennstoffzellensystem mit einer Turbomaschine, ein Verfahren zum Betrieb einer Turbomaschine und ein Verfahren zum Betrieb eines Brennstoffzellensystems.

Durch die DE 10 2015 210574 A1 ist eine Turbomaschine für ein Brennstoffzellensystem bekannt, mit einem Verdichter, einer Antriebsvorrichtung und einer Welle bekannt. Der Verdichter weist ein auf der Welle angeordnetes Laufrad, einen Verdichtereingang und einen Verdichterausgang auf, wobei ein Arbeitsfluid vom Verdichtereingang zum Verdichterausgang förderbar ist. Zur Kühlung der Antriebsvorrichtung wird an dem Verdichterausgang ein Antriebskühlpfad abgezweigt.

Durch die DE 10 2014 224774 A1 und die EP 3 244 033 A1 ist jeweils ebenfalls eine Turbomaschine bekannt, mit einem Verdichter, einer Antriebsvorrichtung und einer Welle bekannt. Der Verdichter weist ein auf der Welle angeordnetes Laufrad, einen Verdichtereingang und einen Verdichterausgang auf, wobei ein Arbeitsfluid vom Verdichtereingang zum Verdichterausgang förderbar ist. Zur Kühlung der Antriebsvorrichtung wird an dem Verdichterausgang ein Antriebskühlpfad abgezweigt.

Durch die US 2012/107105 A1 ist eine Turbomaschine bekannt, mit einem Verdichter, einer Antriebsvorrichtung und einer Welle bekannt. Der Verdichter weist ein auf der Welle angeordnetes Laufrad, einen Verdichtereingang und einen Verdichterausgang auf, wobei ein Arbeitsfluid vom Verdichtereingang zum Verdichterausgang förderbar ist. Zur Kühlung der Antriebsvorrichtung wird an dem Verdichterausgang ein Antriebskühlpfad abgezweigt. In dem Antriebskühlpfad ist ein Kühlventil angeordnet und es ist eine Regelungseinheit vorgesehen, die einen Öffnungsgrad des Kühlventils ansteuert, um einen Istwert der Temperatur des Mediums im Antriebskühlpfad, vorzugsweise im Bereich des stromabseitigen Endes des Antriebskühlpfads, einem Sollwert der Temperatur nachzuführen.

### Offenbarung der Erfindung

Die erfindungsgemäße Turbomaschine hat den Vorteil, dass die Regelungseinheit den Öffnungsgrad des Kühlventils abhängig vom Sollwert für die Temperatur des Mediums im Antriebskühlpfad und abhängig von einem gewünschten Bypassmassenstrom ansteuert. Auf diese Weise lässt sich die Regelung der Temperatur des Kühlmassenstroms bzw. des Mediums im Antriebskühlpfad und die Regelung des Bypassmassenstroms vereinheitlichen und somit die Funktionalität des Kühlventils effizient erhöhen.

In besonders bevorzugten Ausführungen ist in dem Antriebskühlpfad stromaufwärts der Antriebsvorrichtung ein Wärmetauscher angeordnet. Das verdichtete und damit auch erwärmte Arbeitsfluid wird so vor der zu kühlenden Antriebsvorrichtung abgekühlt, so dass die Kühlung der Antriebsvorrichtung effizienter gestaltet ist.

In vorteilhaften Ausführungen weist die Antriebsvorrichtung einen Rotor und einen Stator auf. Der Rotor ist dabei auf der Welle angeordnet. Der Antriebskühlpfad führt durch einen Spalt zwischen dem Rotor und dem Stator. Dadurch ist die Kühlung von Rotor und Stator sehr einfach gestaltet. Vorzugsweise ist der Spalt eine Drosselstelle in dem Antriebskühlpfad, so dass die Strömungsgeschwindigkeit des Arbeitsfluids dort besonders hoch ist und mit ihr auch der Wärmeübergangskoeffizient zwischen der Antriebsvorrichtung und dem Arbeitsfluid.

In vorteilhaften Weiterbildungen ist die Welle mittels zweier Radiallager gelagert, wobei die beiden Radiallager in dem Antriebskühlpfad angeordnet sind. Somit werden zusätzlich zu der Antriebsvorrichtung auch noch die beiden Radiallager wirkungsvoll durch das Arbeitsfluid gekühlt. Bevorzugt sind die beiden Radiallager dabei zu beiden axialen Enden der Antriebsvorrichtung angeordnet.

Vorteilhafterweise verzweigt sich der Antriebskühlpfad in einen ersten Teilpfad und in einen zweiten Teilpfad. Ein Radiallager ist in dem ersten Teilpfad und ein Radiallager ist in dem zweiten Teilpfad angeordnet. Dadurch ist die Strömungsführung des Arbeitsfluids in dem Antriebskühlpfad innerhalb der Turbomaschine sehr einfach gehalten; auf aufwändige Dichtstellen kann verzichtet werden. Vorzugsweise verzweigt sich der Antriebskühlpfad an der Antriebsvorrichtung in den ersten und zweiten Teilpfad.

In vorteilhaften Ausführungen ist die Welle mittels eines Axiallagers gelagert, wobei das Axiallager in dem ersten Teilpfad angeordnet ist. Das Axiallager umfasst dabei vorzugsweise eine Axiallagerscheibe. Dadurch wird auch das Axiallager wirkungsvoll gekühlt. Idealerweise sind das Axiallager und ein Radiallager in dem ersten Teilpfad angeordnet und das andere Radiallager sowie der größte Teil der Antriebsvorrichtung in dem zweiten Teilpfad. Dadurch ist keine der beiden Teilpfade durch die aufzunehmende Wärmemenge überlastet.

In weiteren bevorzugten Ausführungen ist die Welle mittels eines Axiallagers und zumindest eines Radiallagers gelagert. Der Antriebskühlpfad verzweigt sich in einen ersten Teilpfad und in einen zweiten Teilpfad. Das Axiallager ist in dem ersten Teilpfad angeordnet und das Radiallager in dem zweiten Teilpfad. Dadurch werden die beiden Lager wirkungsvoll durch unterschiedliche Teilpfade gekühlt. Weist die Turbomaschine noch ein zweites Radiallager auf, so zweigt vom ersten Teilpfad vorzugsweise noch ein dritter Teilpfad ab, so dass auch das zweite Radiallager von einem eigenen Teilpfad gekühlt wird.

In vorteilhaften Weiterbildungen ist in dem ersten Teilpfad - bevorzugt stromabwärts des Axiallagers - ein Teilpfadventil angeordnet. Dadurch kann der Massenstrom der Luft bzw. des Oxidationsmittels durch das Axiallager gesteuert werden. Vorzugsweise ist das Teilpfadventil dazu als Proportionalventil ausgeführt. Das Teilpfadventil verteilt letztendlich den Gesamtmassenstrom der Luft bzw. des Oxidationsmittels durch den Antriebskühlpfad auf die einzelnen Teilpfade; die darin angeordneten Komponenten können so bedarfsgerecht optimal gekühlt werden.

In vorteilhaften Weiterbildungen ist gegenüberliegend zu der Rückseite des Laufrads eine Rückwand als Teil eines Gehäuses der Turbomaschine angeordnet. In der Rückwand sind Entlüftungsbohrungen ausgebildet. Die Entlüftungsbohrungen sind in einem Radrückenkühlpfad der Turbomaschine angeordnet, welcher von dem Verdichterausgang abzweigt. Der Radrückenkühlpfad ist somit neben dem Antriebskühlpfad ein zweiter Kühlpfad, der von dem Verdichterausgang abzweigt. Dadurch kann eine ohnehin vorhandene Leckage des Arbeitsfluids genutzt bzw. ein an der Rückseite entstehender Staudruck des Arbeitsfluids verhindert werden; ganz im Gegenteil: das auf die Rückseite strömende Arbeitsfluid wird zur Kühlung, insbesondere des Axiallagers, herangezogen.

Dementsprechend führt der Radrückenkühlpfad bevorzugt durch das Axiallager. Beispielsweise kann das Axiallager dazu als eine auf der Welle angeordnete Axiallagerscheibe ausgeführt sein, welche mit einer Anlaufplatte zusammenwirkt. Das Arbeitsfluid strömt dann in den Spalt zwischen Anlaufplatte und Axiallagerscheibe. Die Anlaufplatte ist dabei an dem Gehäuse der Turbomaschine angeordnet bzw. ein Teil des Gehäuses.

In vorteilhaften Ausführungen ist die Welle mittels zweier Radiallager gelagert. Der Antriebskühlpfad verzweigt sich in einen ersten Teilpfad und in einen zweiten Teilpfad. Ein Radiallager ist in dem ersten Teilpfad und ein Radiallager ist in dem zweiten Teilpfad angeordnet. Der Radrückenkühlpfad mündet in den ersten Teilpfad, vorzugsweise stromaufwärts des Axiallagers. Dadurch wird der Massenstrom in dem ersten Teilpfad erhöht und mit ihm die Kühlwirkung des ersten Teilpfads.

In vorteilhaften Weiterbildungen ist das Laufrad als Radialläufer ausgeführt. Das Laufrad ist auf seiner Vorderseite von dem Arbeitsfluid entlang eines Strömungspfads durchströmbar. Der Strömungspfad umfasst ein axiales Strömungsende und ein radiales Strömungsende; das axiale Strömungsende entspricht dabei dem Verdichtereingang und das radiale Strömungsende dem Verdichterausgang. Funktionsbedingt treten an dem Laufrad fluidisch resultierende Axialkräfte auf, welche vorzugsweise durch ein Axiallager gelagert werden. Vorzugsweise wird das Axiallager auch durch den Antriebskühlpfad gekühlt.

In bevorzugten Weiterbildungen ist zusätzlich zu dem Kühlventil das Teilpfadventil in einem der Teilpfade angeordnet, so dass nicht nur der gesamte Massenstrom der Luft bzw. des Oxidationsmittels gesteuert werden kann, sondern auch die Aufteilung des Massenstroms in den Teilpfaden. Dementsprechend ist auch das Teilpfadventil vorzugsweise als Proportionalventil ausgeführt.

In vorteilhaften Verwendungen ist die Turbomaschine in einem Brennstoffzellensystem angeordnet. Die Turbomaschine ist dazu als Turbokompressor bzw. das Laufrad als Verdichter ausgeführt. Das Brennstoffzellensystem weist eine Brennstoffzelle, eine Luftzuführungsleitung zum Zuführen eines Oxidationsmittels in die Brennstoffzelle und eine Abgasleitung zum Abführen des Oxidationsmittels aus der Brennstoffzelle auf. Der Verdichter ist in der Luftzuführungsleitung angeordnet. Die Luftzuführungsleitung dient dabei der Zuströmung des Arbeitsfluids bzw. Oxidationsmittels in die Brennstoffzelle, und die Abgasleitung dient der Abfuhr des Oxidationsmittels bzw. des reagierten Oxidationsmittels bzw. einem Gemisch daraus aus der Brennstoffzelle. Der Turbokompressor ist gemäß einer der oben beschriebenen Ausführungsformen gestaltet. Vorzugsweise ist das Laufrad dabei als Radialläufer ausgeführt. Als Oxidationsmittel wird bevorzugt die Umgebungsluft verwendet. Die Kühlung möglichst vieler Komponenten der Turbomaschine durch den Antriebskühlpfad erhöht deren Effizienz und Lebensdauer.

In vorteilhaften Weiterbildungen weist das Brennstoffzellensystem eine Abgasturbine mit einem weiteren Laufrad auf. Das weitere Laufrad ist ebenfalls auf der Welle angeordnet. Die Abgasturbine ist in der Abgasleitung angeordnet. Vorzugsweise ist das weitere Laufrad der Abgasturbine entgegenorientiert zum Laufrad des Turbokompressors angeordnet, so dass sich die jeweils wirksamen resultierenden Axialkräfte auf die beiden Laufräder teilweise kompensieren. Das aus der Brennstoffzelle ausströmende reagierte Arbeitsfluid bzw. Oxidationsmittel kann sehr wirkungsvoll als Leistungsquelle für die Abgasturbine verwendet werden; dadurch wird die benötigte Antriebsleistung der Antriebsvorrichtung für den Turbokompressor reduziert. Vorteilhafterweise ist dabei die Abgasleitung von dem Kühlfluidpfad getrennt, so dass dem Kühlfluidpfad kein aufgeheiztes Medium zugeführt wird.

Ein Vorteil ergibt sich dadurch, dass der Antriebskühlpfad stromauf der Abgasturbine in die Abgasleitung mündet. Auf diese Weise wird der Kühlmassenstrom auf die Abgasturbine geleitet. Dadurch wird eine Rekuperation der Restenergie des Kühlmassenstroms ermöglicht, so dass Energie beim Betrieb des Verdichters eingespart werden kann.

Vorteilhaft ist es auch, wenn der Antriebskühlpfad stromab der Abgasturbine in die Abgasleitung mündet. Auf diese Weise wird ein maximales Druckgefälle über den Antriebskühlpfad erzielt, so dass hohe Massenströme über den Antriebskühlpfad ermöglicht werden, die eine größtmögliche Kühlwirkung zur Folge haben, da sie die von den zu kühlenden Komponenten aufgenommene Wärme schnellstmöglich abtransportieren.

Ein weiterer Vorteil wird durch den davon abhängigen Verfahrensanspruch erzielt, wonach der Öffnungsgrad des Kühlventils von der Regelungseinheit angesteuert wird, um abhängig von einem detektierten Verdichterpumpen einen gewünschten Bypassmassenstrom im Antriebskühlpfad einzustellen, der größer als der zum Einstellen des Sollwertes für die Temperatur des Mediums im Antriebskühlpfad erforderliche Massenstrom ist. Auf diese Weise lassen sich durch den so eingestellten resultierenden Kühlmassenstrom sowohl die ausreichende Kühlung der Antriebsvorrichtung bzw. der Komponenten der Turbomaschine als auch die Vermeidung von Verdichterpumpen sicherstellen. Durch die erfindungsgemäße Ansteuerung des Kühlventils wird somit sichergestellt, dass durch die Zusammenführung des Antriebskühlpfades und des Bypasskanals in einen gemeinsamen Kanal sowohl die Funktion des Antriebskühlpfades als auch jene des Bypasskanals gewährleistet wird.

Das erfindungsgemäße Verfahren zum Betrieb eines Brennstoffzellensystems mit einer Turbomaschine weist den Vorteil auf, dass der Öffnungsgrad des Kühlventils von der Regelungseinheit angesteuert wird, um abhängig von einem gewünschten Betriebszustand des Brennstoffzellensystems einen gewünschten Bypassmassenstrom im Antriebskühlpfad einzustellen, der größer als der zum Einstellen des Sollwertes für die Temperatur des Mediums im Antriebskühlpfad erforderliche Massenstrom ist. Auf diese Weise lassen sich durch den so eingestellten resultierenden Kühlmassenstrom sowohl die ausreichende Kühlung der Antriebsvorrichtung bzw. der Komponenten der Turbomaschine als auch die Einstellung eines gewünschten Betriebszustandes des Brennstoffzellensystems sicherstellen. Durch die erfindungsgemäße Ansteuerung des Kühlventils wird somit sichergestellt, dass durch die Zusammenführung des Antriebskühlpfades und des Bypasskanals in einen gemeinsamen Kanal sowohl die Funktion des Antriebskühlpfades als auch jene des Bypasskanals gewährleistet wird.

Das Brennstoffzellensystem kann vorzugsweise dazu eingerichtet sein, eine Antriebsvorrichtung eines Kraftfahrzeugs anzutreiben.

### Kurze Beschreibung der Zeichnungen

Weitere optionale Einzelheiten und Merkmale der Erfindung ergeben sich aus der nachfolgenden Beschreibung bevorzugter Ausführungsbeispiele, welche in den Figuren schematisch dargestellt sind.

Es zeigen:
- Figur 1: schematisch ein Brennstoffzellensystem mit einer als Turbokompressor ausgeführten Turbomaschine aus dem Stand der Technik,
- Figur 2: schematisch einen Schnitt durch eine Turbomaschine, wobei nur die wesentlichen Bereiche dargestellt sind,
- Figur 3: schematisch einen Schnitt durch eine erfindungsgemäße Turbomaschine, wobei nur die wesentlichen Bereiche dargestellt sind
- Figur 4: schematisch ein Brennstoffzellensystem mit einer als Turbokompressor ausgeführten Turbomaschine gemäß einem ersten Ausführungsbeispiel,
- Figur 5: schematisch ein Brennstoffzellensystem mit einer als Turbokompressor ausgeführten Turbomaschine gemäß einem zweiten Ausführungsbeispiel und

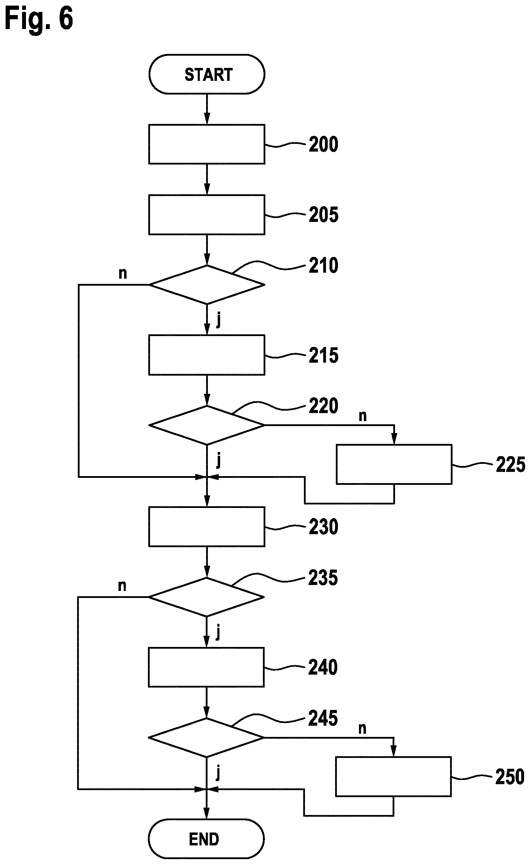

- Figur 6: einen Ablaufplan für ein erfindungsgemäßes Verfahren zum Betrieb der Turbomaschine bzw. des Brennstoffzellensystems.

### Ausführliche Beschreibung der Erfindung

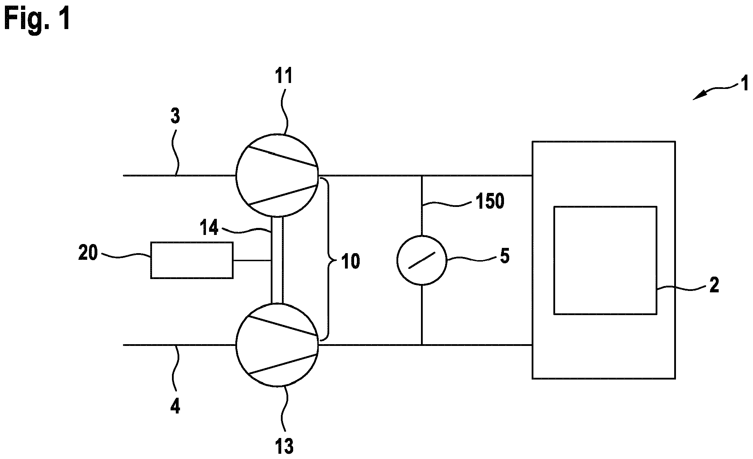

**Fig.1** zeigt ein aus der DE 10 2012 224 052 A1 bekanntes Brennstoffzellensystem 1. Das Brennstoffzellensystem 1 umfasst eine Brennstoffzelle 2, eine Luftzuführungsleitung 3, eine Abgasleitung 4, einen Verdichter 11, eine Abgasturbine 13, einen Bypasskanal 150 mit einem Bypassventil 5 zur Druckabsenkung und eine nicht näher gezeigte Zuführungsleitung für Brennstoff zu der Brennstoffzelle 2. Das Bypassventil 5 kann beispielsweise eine Regelklappe sein. Als Bypassventil 5 kann beispielsweise ein Wastegate-Ventil eingesetzt werden.

Die Brennstoffzelle 2 ist eine galvanische Zelle, die chemische Reaktionsenergie eines über die nicht gezeigte Brennstoffzuführungsleitung zugeführten Brennstoffes und eines Oxidationsmittels in elektrische Energie wandelt, das bei der hier gezeigten Ausführungsform Ansaugluft ist, die über die Luftzuführungsleitung 3 der Brennstoffzelle 2 zugeführt wird. Der Brennstoff kann vorzugsweise Wasserstoff oder Methan oder Methanol sein. Entsprechend entsteht als Abgas Wasserdampf oder Wasserdampf und Kohlendioxid. Die Brennstoffzelle 2 ist beispielsweise eingerichtet, eine Antriebsvorrichtung eines Kraftfahrzeugs anzutreiben. Beispielsweise treibt die durch die Brennstoffzelle 2 erzeugte elektrische Energie dabei einen Elektromotor des Kraftfahrzeugs an.

Der Verdichter 11 ist in der Luftzuführungsleitung 3 angeordnet. Die Abgasturbine 13 ist in der Abgasleitung 4 angeordnet. Der Verdichter 11 und die Abgasturbine 13 sind über eine Welle 14 mechanisch verbunden. Die Welle 14 ist von einer Antriebsvorrichtung 20 elektrisch antreibbar. Die Abgasturbine 13 dient der Unterstützung der Antriebsvorrichtung 20 zum Antreiben der Welle 14 bzw. des Verdichters 11. Der Verdichter 11, die Welle 14 und die Abgasturbine 13 bilden zusammen eine Turbomaschine 10.

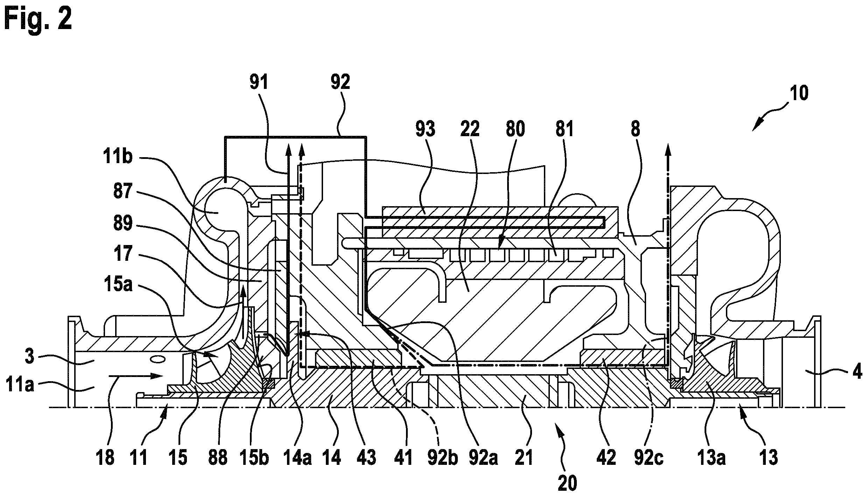

**Fig.2** zeigt schematisch einen Längsschnitt einer Turbomaschine 10, insbesondere zur Verwendung in einem Brennstoffzellensystem 1. Die Turbomaschine 10 weist ein Gehäuse 8 auf, in welchem die Komponenten der Turbomaschine 10 angeordnet sind und welches mehrteilig ausgeführt ist. Die Turbomaschine 10 ist in dieser Ausführung als Turbokompressor 10 ausgeführt und weist ein auf der Welle 14 angeordnetes Laufrad 15 auf, welches als Verdichter 11 bzw. Kompressor wirkt. Zusätzlich weist die Turbomaschine 10 optional die Abgasturbine 13 auf, welche ein auf der Welle 14 angeordnetes weiteres Laufrad 13a umfasst. Vorzugsweise sind dabei das weitere Laufrad 13a und das Laufrad 15 auf den entgegengesetzten Enden der Welle 14 positioniert.

Vorteilhafterweise ist die Turbomaschine 10 in dem Brennstoffzellensystem 1 angeordnet, so dass das Laufrad 15 des Verdichters 11 in der Luftzuführungsleitung 3 angeordnet ist, um die Brennstoffzelle 2 mit Umgebungsluft bzw. Oxidationsmittel zu versorgen, und so dass das weitere Laufrad 13a der Abgasturbine 13 in der Abgasleitung 4 angeordnet ist.

Die Antriebsvorrichtung 20 der Turbomaschine 10 ist als Elektromotor ausgeführt, zwischen dem Verdichter 11 und der Abgasturbine 13 angeordnet und umfasst einen Rotor 21 und einen Stator 22. Der Rotor 21 ist ebenfalls auf der Welle 14 angeordnet. Der Stator 22 ist ortsfest in dem Gehäuse 8 des Turbokompressors 10 positioniert. Die Welle 14 ist zu beiden Seiten der Antriebsvorrichtung 20 mittels je eines Radiallagers 41, 42 drehbar gelagert. Die Antriebsvorrichtung 20 ist zwischen den beiden Radiallagern 41, 42 positioniert. Den Stator 22 radial umgebend ist eine Kühlung 80 angeordnet. In der Ausführung der **Fig.2** weist die Kühlung 80 in dem Gehäuse 8 ausgebildete Kühlnuten 81 auf, so dass ein Kühlmittel den Stator 22 umströmen und wirkungsvoll kühlen kann.

Das Laufrad 15 ist in der Ausführung der **Fig.2** als Radialläufer ausgeführt, wird also im Falle des Einsatzes als Turbokompressor bzw. Verdichter 11 axial angeströmt und strömt radial ab; das Oxidationsmittel bzw. Arbeitsfluid strömt somit von einem Verdichtereingang 11a zu einem Verdichterausgang 11b. Das Laufrad 15 weist dazu auf seiner Vorderseite 15a einen Strömungspfad auf, welcher ein axiales Strömungsende 18 und ein radiales Strömungsende 17 umfasst. Wie bei einem Radialläufer üblich ändert sich die Richtung eines durch das Laufrad 15 strömenden Arbeitsfluids in der Schnittansicht um etwa 90°. Im Falle der Ausführung als Turbokompressor wird das Laufrad 15 am axialen Strömungsende 18 - also am Verdichtereingang 11a - von dem Arbeitsfluid axial angeströmt, das Arbeitsfluid durchläuft dann den Strömungspfad 16 auf der Vorderseite 15a und wird dabei verdichtet und tritt anschließend am radialen Strömungsende 17 - also am Verdichterausgang 11b - radial aus dem Laufrad 15 aus.

Auf der Rückseite 15b des Laufrads 15 ist eine Rückwand 89 als Teil des Gehäuses 8 gegenüberliegend zu der Rückseite 15b angeordnet. Die Rückseite 15b ist fluidisch mit dem radialen Strömungsende 17 verbunden und weist in Abhängigkeit von etwaigen Drosselstellen auch dessen Druckniveau auf. Die Rückwand 89 kann in bevorzugten Ausführungen auch ein Axiallager für das Laufrad 15 ausbilden. In der Ausführung der **Fig.2** ist das Axiallager 43 jedoch zwischen einer Axiallagerscheibe 14a und einer Anlaufplatte 87 ausgebildet. Die Axiallagerscheibe 14a ist auf der Welle 14 angeordnet, und die Anlaufplatte 87 ist an dem Gehäuse 8 angeordnet bzw. als ein Bestandteil des Gehäuses ausgeführt.

In der Rückwand 89 sind Entlüftungsbohrungen 88 ausgebildet, welche von der Rückseite 15b weg in Richtung des Inneren der Turbomaschine 10 führen. Durch die Entlüftungsbohrungen 88 in der Rückwand 89 findet eine Entlüftung des Radrückens bzw. der Rückseite 15b des Laufrads 15 statt. Dadurch sinkt zum einen die vom Verdichter 11 erzeugte Axialkraft, wodurch die im Axiallager 43 auftretende Verlustleistung reduziert werden kann. Die durch die Entlüftungsbohrungen 88 austretende Leckage des Oxidationsmittels wird des Weiteren zur Kühlung des zwischen der Axiallagerscheibe 14a und der Anlaufplatte 87 ausgebildeten Axiallagers 43 verwendet, das durchströmt wird.

Der Kühlpfad von der Rückseite 15b durch die Entlüftungsbohrungen 88 und durch das Axiallager 43 ist als Radrückenkühlpfad 91 bezeichnet. Das am Ende des Radrückenkühlpfads 91 entspannte Oxidationsmittel wird aus der Turbomaschine 10 herausgeführt, oder kann auch wieder dem axialen Strömungsende 18 zugeführt werden.

Am Verdichterausgang 11b zweigt ein weiterer Kühlpfad von der Luftzuführungsleitung 3 ab: der Antriebskühlpfad 92. Ein Teil des Oxidationsmittels bzw. Arbeitsfluids wird dazu am Verdichterausgang 11b abgezweigt, um im Inneren der Turbomaschine 10 die Antriebsvorrichtung 20 und die Radiallager 41, 42 zu kühlen. Stromabwärts des Verdichterausgangs 11b ist in dem Antriebskühlpfad 92 bevorzugt jedoch zunächst ein Wärmetauscher 93 angeordnet, um das verdichtete und erhitzte Arbeitsfluid herunter zu kühlen.

Die vom Verdichter 11 verdichtete Luft - bzw. das verdichtete Oxidationsmittel - wird also nicht vollständig zu der Brennstoffzelle 2 geführt. Ein geringer Anteil wird am Verdichterausgang 11b entnommen und zunächst über den Wärmetauscher 93 gekühlt. Dazu wird bevorzugt das Kühlwasser der Kühlung 80 verwendet, welche den Stator 22 kühlt. Anschließend wird die gekühlte Luft - bzw. das gekühlte Oxidationsmittel - in das Gehäuse 8 zwischen dem linken Radiallager 41 und dem Stator 22 geleitet. Dort verzweigt sich der Massenstrom des Antriebskühlpfads 92 an einem Verzweigungspunkt 92a in einen ersten Teilpfad 92b und einen zweiten Teilpfad 92c.

Der erste Teilpfad 92b führt nach dem Verzeigungspunkt 92a in den Spalt zwischen der Welle 14 und dem linken Radiallager 41, weiter an der Axiallagerscheibe 14a vorbei und wird schließlich aus dem Gehäuse 8 geleitet. Der zweite Teilpfad 92c führt nach dem Verzeigungspunkt 92a in den Spalt zwischen dem Rotor 21 und dem Stator, weiter in den Spalt zwischen der Welle 14 und dem rechten Radiallager 42 und wird an der Abgasturbine 13 vorbei aus dem Gehäuse 8 geleitet.

Durch die Strömungsführung des zweiten Teilpfads 92c durch den Spalt zwischen Rotor 21 und Stator 22 sowie das rechte Radiallager 42 ergibt sich des Weiteren der Vorteil, dass eine auftretende - gegebenenfalls auch feuchte - Leckage aus der Turbomaschine 10 abgeführt wird. Der erste Teilpfad 92b und der zweite Teilpfad 92c verlassen nach der Kühlung der Komponenten die Turbomaschine 10 und werden beispielsweise nach der Abgasturbine 13 der Abgasleitung 4 zugeführt.

Die durch den Verdichter 11 verdichtete und somit erhitzte Luft wird durch den Wärmetauscher 93 abgekühlt und anschließend wieder in das Gehäuse 8 zu der Antriebsvorrichtung 20 und den Lagerstellen (Radiallager 41, 42 und Axiallager 43) zurückgeführt; dadurch ist das Kühlkonzept der Turbomaschine 10 optimiert. Vorzugsweise werden in der Turbomaschine 10 mehrere Teilpfade 92b, 92c des Antriebskühlpfads 92 geschaffen, um möglichst jede Komponente (Radiallager 41, 42, Axiallager 43, Spalt zwischen Rotor 21 und Stator 22) separat kühlen zu können. Diese Komponenten liegen direkt in dem Antriebskühlpfad 92 bzw. in dem Radrückenkühlpfad 91, werden also direkt von dem Arbeitsfluid angeströmt und mittels erzwungener Konvektion gekühlt, was sehr effektiv ist. Die auf Wärmeleitung basierende Kühlung 80 wird so sehr gut unterstützt, insbesondere in dem Spalt zwischen Rotor 21 und Stator 22 sowie in den Lagerstellen, da diese Positionen relativ weit von der Kühlung 80 entfernt liegen und dementsprechend der Wärmefluss von ihnen zur Kühlung 80 eher gering ist.

Vorzugsweise ist der Wärmetauscher 93 als Luft-Wasser-Wärmetauscher ausgebildet, welcher die Luft in dem Antriebskühlpfad 92 durch das Kühlmittel der Kühlung 80 kühlt.

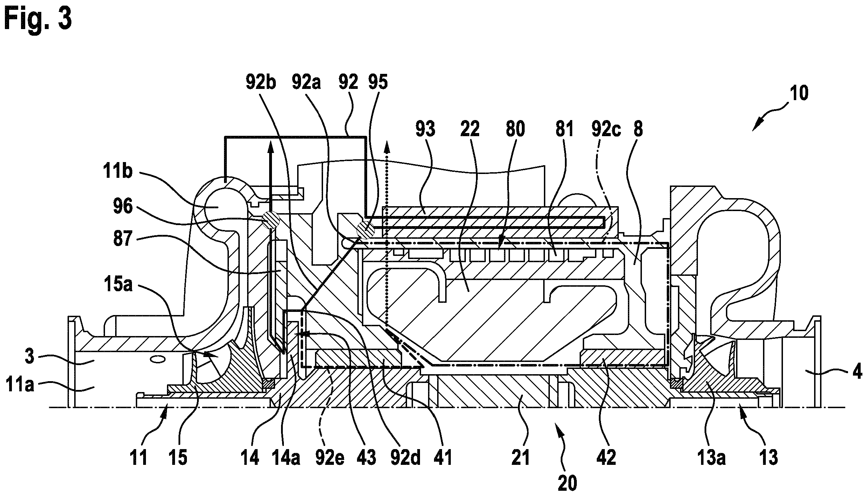

**Fig.3** zeigt einen Schnitt einer Turbomaschine 10, die der Ausführung der **Fig.2** ähnlich ist. Im Folgenden wird daher im Wesentlichen auf die Unterschiede der beiden Ausführungen eingegangen.

Die vom Verdichter 11 verdichtete Luft wird wie in der Ausführung der **Fig.2** nicht vollständig zur Brennstoffzelle 2 geführt. Ein geringer Anteil wird entnommen und zunächst über den Wärmetauscher 93 gekühlt. Dazu wird vorzugsweise das Kühlwasser der Kühlung 80 zur Kühlung des Stators 22 verwendet. Anschließend wird die gekühlte Luft über den Antriebskühlpfad 92 in das Gehäuse 8 geführt und teilt sich dort an dem Verzweigungspunkt 92a in den ersten Teilpfad 92b und den zweiten Teilpfad 92c auf. In dem ersten Teilpfad 92b ist stromabwärts des Verzweigungspunkts 92a ein weiterer Verzweigungspunkt 92d angeordnet, von welchem ein dritter Teilpfad 92e abzweigt.

Der erste Teilpfad 92b führt stromabwärts des weiteren Verzweigungspunkts 92d durch das Axiallager 43, der dritte Teilpfad 92e durch das linke Radiallager 41. Der zweite Teilpfad 92c führt durch das rechte Radiallager 42 und vereinigt sich im Bereich der Antriebsvorrichtung 20 mit dem dritten Teilpfad 92e, um gemeinsam wieder aus dem Gehäuse 8 herausgeführt zu werden. Getrennt davon verlässt der erste Teilpfad 92b das Gehäuse 8. Damit werden alle drei Lager 41, 42, 43 jeweils getrennt voneinander von einem eigenen Teilpfad 92b, 92c, 92e gekühlt. Nach dem Ausgang der Teilpfade 92b, 92c, 92e aus dem Gehäuse 8 können diese bevorzugt an die Abgasleitung 4 stromabwärts der Abgasturbine 13 angebunden werden.

Zur Abstimmung der Massenströme in den jeweiligen Teilpfaden 92b, 92c, 92e sind in bevorzugten Weiterbildungen Ventile angebracht. Diese können je nach Bedarf einzelne Teilpfade 92b, 92c, 92e drosseln:
- Ein Kühlventil 95 ist stromaufwärts der Teilpfade 92b, 92c, 92e in dem Antriebskühlpfad 92 angeordnet.
- Ein Teilpfadventil 96 ist stromabwärts des Axiallagers 43 in dem ersten Teilpfad 92b angeordnet.

Durch das Kühlventil 95 kann der gesamte Massenstrom der Luft bzw. des Oxidationsmittels durch den Antriebskühlpfad 92 gesteuert werden, also die Summe der Massenströme durch die drei Teilpfade 92b, 92c, 92e, wobei das Kühlventil 95 stromaufwärts dieser Teilpfade 92b, 92c, 92e angeordnet ist. Das Teilpfadventil 96 wiederum steuert den Massenstrom der Luft bzw. des Oxidationsmittels durch den ersten Teilpfad 92b nach dem weiteren Verzweigungspunkt 92d, und ist stromabwärts des Axiallagers 43 angeordnet. Das heißt bei geöffnetem Kühlventil 95 und geschlossenem Teilpfadventil 96 werden die beiden Radiallager 41, 42 von Luft bzw. Oxidationsmittel durchströmt, nicht aber das Axiallager 43.

Die beiden Ventile 95, 96 können optional auch entsprechend in den Ausführungen nach **Fig.2** eingesetzt werden, um die Massenströme im Antriebskühlpfad 92 bzw. in den Teilpfaden 92b, 92c zu steuern.

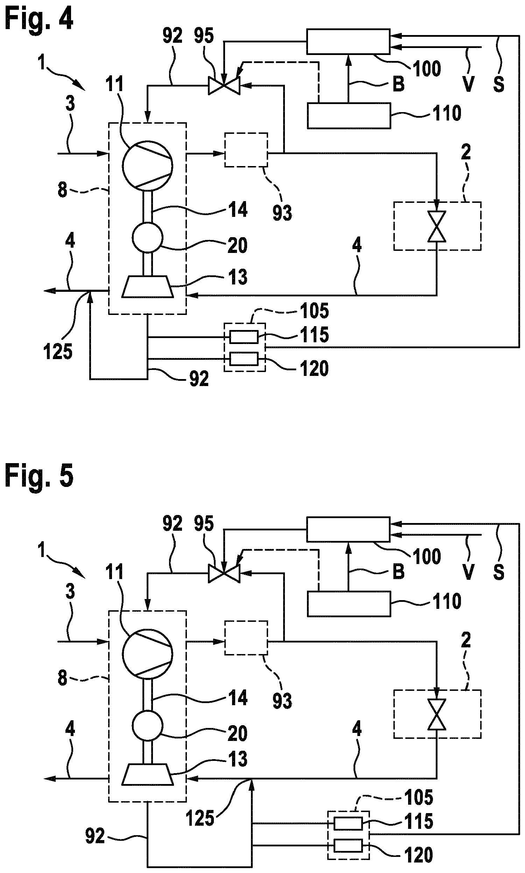

In Figur 4 ist schematisch das Brennstoffzellensystem 1 mit der als Turbokompressor ausgeführten Turbomaschine 10 gemäß einem ersten Ausführungsbeispiel dargestellt. Dabei kennzeichnen gleiche Bezugszeichen gleiche Elemente wie in den zuvor beschriebenen Figuren. Im Vergleich zum in Figur 1 dargestellten Brennstoffzellensystem ergeben sich die folgenden Unterschiede: Zum einen ist am Ausgang des Verdichters 11 der Antriebskühlpfad 92 abgezweigt. Dabei kann es zusätzlich vorgesehen sein, wie in Figur 4 dargestellt und zu Figur 2 beschrieben, ausgangsseitig des Verdichters 11 zunächst den Wärmetauscher 93 zur Kühlung des Arbeitsfluids vorzusehen und den Antriebskühlpfad 92 stromab des Wärmetauschers 93 abzuzweigen. Vor Eintritt in das Gehäuse 8 weist der Antriebskühlpfad 92 das Kühlventil 95 auf, wie es auch in Figur 3 erkennbar ist. Das Kühlventil 95 kann alternativ auch innerhalb des Gehäuses 8 angeordnet sein. Nach Verlassen des Gehäuses 8 mündet der Antriebskühlpfad 92 stromab der Abgasturbine 13 in die Abgasleitung 4, wie auch zu Figur 3 beschrieben.

Dadurch wird ein maximales Druckgefälle über den Antriebskühlpfad 92 erzielt, so dass hohe Massenströme über den Antriebskühlpfad 92 ermöglicht werden. Da der Antriebskühlpfad 92 als Drosselstelle wirkt, ist ein Druckgefälle über dem Antriebskühlpfad 92 zur Erzeugung des Kühlmassenstroms erforderlich. Der Kühlmassenstrom, der sich im Antriebskühlpfad 92 einstellt ist dabei maßgeblich von dem nach dem Verdichter 11 herrschenden Druck abhängig. Dadurch stellt sich nahe der Pumpgrenze bei entsprechend hohen Drücken am Verdichterausgang 11b der größte Kühlmassenstrom ein und nahe der Stopfgrenze bei entsprechend niedrigen Drücken am Verdichterausgang 11b der geringste Kühlmassenstrom. Zur Anpassung des benötigten Kühlmassenstroms an die Betriebspunkte bzw. Betriebszustände des Brennstoffzellensystems 1 kann das Kühlventil 95 im einfachsten Fall als Festdrossel mit vorgegebenem festen Öffnungsgrad ausgebildet sein, der für die am häufigsten verwendeten Betriebspunkte bzw. Betriebszustände des Brennstoffzellensystems 1 eine ausreichende Kühlleistung für die Antriebsvorrichtung 20 bzw. die Komponenten der Turbomaschine 10 gewährleistet. Der benötigte Kühlmassenstrom hängt dabei von verschiedenen Faktoren wie der Verdichterdrehzahl und dem Verdichtungsverhältnis der Turbomaschine 10 sowie der Leistung der Antriebsvorrichtung 20 ab. Dabei wird im Vergleich zum benötigten Öffnungsgrad ein höherer Öffnungsgrad des Kühlventils 95 fest eingestellt, um im Hinblick auf die erforderliche Kühlleistung auf der sicheren Seite zu sein. Dementsprechend wird die Turbomaschine 10 nicht wirkungsgradoptimal betrieben.

Deshalb wird erfindungsgemäß eine Steuerung oder Regelung des Kühlmassenstroms mittels einer Steuereinheit 110 vorgeschlagen, bei der die Drosselcharakteristik des Antriebskühlkanals 92 je nach Betriebspunkt bzw. Betriebszustand B des Brennstoffzellensystems 1 angepasst wird. Das Kühlventil 95 ist in diesem Fall beispielsweise ein elektromagnetisches oder mechanisches, beispielsweise als Bimetallventil ausgebildetes, Proportionalventil und ermöglicht somit eine variable Einstellung seines Öffnungsgrades. Die Anpassung der Drosselcharakteristik des Antriebskühlkanals 92 an den aktuellen Betriebszustand oder Betriebspunkt B des Brennstoffzellensystems 1 kann beispielsweise durch eine kennfeldbasierte Ventilsteuerung erfolgen. Dabei ist dem aktuellen Betriebszustand des Brennstoffzellensystems 1 abhängig von Verdichterdrehzahl und Verdichtungsverhältnis der Turbomaschine 10 sowie der Leistung der Antriebsvorrichtung 20 jeweils ein benötigter Kühlmassenstrom und damit verknüpft ein zugeordneter Öffnungsgrad des Kühlventils 95 zugeordnet. Dementsprechend wird das Kühlventil 95 zur Einstellung des gewünschten Öffnungsgrades angesteuert. Auf diese Weise lässt sich der für die erforderliche Kühlleistung minimale Kühlmassenstrom einstellen und somit die Turbomaschine 10 in jedem Betriebspunkt bzw. Betriebszustand des Brennstoffzellensystems wirkungsgradoptimal betreiben.

Das Kennfeld ist in der Steuereinheit 110 abgelegt und experimentell ermittelt worden. Der aktuelle Betriebszustand oder Betriebspunkt B des Brennstoffzellensystems 1 in Form der Verdichterdrehzahl und des Verdichtungsverhältnisses der Turbomaschine 10 sowie der Leistung der Antriebsvorrichtung 20 liegt in der Steuereinheit 110 ebenfalls vor oder wird ihr mittels Sensorik zugeführt. Die kennfeldbasierte Steuerung des Kühlventils 95 durch die Steuereinheit 110 ist in Figur 4 gestrichelt dargestellt.

Alternativ wird der Öffnungsgrad des Kühlventils 95 geregelt und diesbezüglich von einer Regelungseinheit 100 und somit nicht mehr direkt von der Steuereinheit 110 angesteuert. Dabei kann das Kühlventil 95 wie auch zur kennfeldbasierten Steuerung beschrieben ausgebildet sein. Der Regelungseinheit 100 wiederum sind von einer Sensoreinheit 105 Sensorsignale S zugeführt. Die Brennstoffzelle 2 im Brennstoffzellensystem 1 nach Figur 4 ist als Drosselventil dargestellt, um die drosselnde Wirkung der Brennstoffzelle 2 auf den Massenstrom des Oxidationsmittels oder Arbeitsfluids bspw. in Form von Ansaugluft zu verdeutlichen.

Die Regelungseinheit 100 stellt nun den Öffnungsgrad des Kühlventils 95 primär so ein, dass die erforderliche Kühlwirkung zur Kühlung der Antriebsvorrichtung 20 bzw. der Komponenten der Turbomaschine 10 im jeweiligen Betriebspunkt bzw. Betriebszustand B des Brennstoffzellensystems 1 erzielt wird. Dazu ist in der Sensoreinheit 105 ein Temperatursensor 115 vorgesehen, der die Temperatur des Mediums im Antriebskühlpfad 92 und damit die Temperatur des Kühlmassenstroms misst. Diese Temperatur stellt einen Istwert bzw. eine Isttemperatur dar, die der Regelungseinheit 100 über die Sensorsignale S zugeführt wird. Für die Temperatur des Mediums im Antriebskühlpfad 92 ist in der Regelungseinheit 100 ein Sollwert hinterlegt. Durch Ansteuerung des Öffnungsgrades des Kühlventils 95 führt die Regelungseinheit 100 den Istwert dem Sollwert nach. Dabei führt eine Erhöhung des Öffnungsgrades des Kühlventils 95 zu einem Anstieg des Kühlmassenstroms und damit zu einer Temperaturabsenkung des Mediums im Antriebskühlkanal 92. Umgekehrt führt eine Reduzierung des Öffnungsgrades des Kühlventils 95 zu einem Rückgang des Kühlmassenstroms und damit zu einer Temperaturerhöhung des Mediums im Antriebskühlkanal 92. Auf diese Weise lässt sich der für die erforderliche Kühlleistung minimale Kühlmassenstrom einstellen und somit die Turbomaschine 10 in jedem Betriebspunkt bzw. Betriebszustand des Brennstoffzellensystems 1 wirkungsgradoptimal betreiben.

Vorteilhafterweise und wie in Figur 4 dargestellt, wird die Temperatur des Mediums im Antriebskühlpfad 92 vom Temperatursensor 115 am stromabseitigen Ende des Antriebskühlpfades 92, dem sogenannten Auslass oder Ausgang 125 des Antriebskühlpfades 92, gemessen, also an einer Stelle des Antriebskühlpfades 92, an der der Kühlmassenstrom die Antriebsvorrichtung 20 und die zu kühlenden Komponenten der Turbomaschine 10 bereits durchlaufen hat und keine weitere Kühlfunktion mehr hat. Auf diese Weise wird bei der beschriebenen Regelung der Temperatur des Antriebskühlpfades 92 die bei der Kühlung aufgenommene Wärme des Kühlmassenstroms vollständig erfasst und mithin die Kühlwirkung vollständig berücksichtigt. Dabei ist der Ausgang 125 in Figur 4 nur schematisch dargestellt. Wie zu den Figuren 2 und 3 beschrieben kann der Antriebskühlpfad 92 in mehrere Teilpfade 92b, 92c, 92e aufgeteilt sein, die die Antriebsvorrichtung 20 bzw. die Komponenten der Turbomaschine 10 an verschiedenen Ausgängen verlassen. Der Temperatursensor 115 misst dann die Temperatur des Mediums an einem dieser Ausgänge. Alternativ kann auch an jedem der Ausgänge jeweils ein Temperatursensor angeordnet sein, um die dortige Temperatur des Mediums des jeweiligen Teilpfades 92b, 92c, 92e zu messen. Als Istwert kann in diesem Fall der arithmetische Mittelwert der an den Ausgängen gemessenen Temperaturen fungieren.

Als Sollwert für die Temperatur, auch als Solltemperatur bezeichnet, kann ein experimentell ermittelter Wert der Temperatur am Ausgang 125 oder im Falle der beschriebenen Teilpfade 92b, 92c, 92e an den entsprechenden Ausgängen dieser Teilpfade 92b, 92c, 92e verwendet werden. Dabei kann der experimentell ermittelte Wert als Grenzwert gewählt werden, der am Ausgang 125 bzw. an den Ausgängen nicht überschritten werden darf, um die Betriebssicherheit der Antriebsvorrichtung 20 bzw. der Komponenten der Turbomaschine 10 zu gewährleisten und sie vor Schädigung zu schützen.

Die Stellgröße des Regelkreises ist dabei die Drosselstellung bzw. der Öffnungsgrad des Kühlventils 95. Um zu gewährleisten, dass die Messstelle des Temperatursensors 115 am Ausgang 125 des Antriebskühlpfades 92 oder im Falle der beschriebenen Teilpfade 92b, 92c, 92e an den entsprechenden Ausgängen dieser Teilpfade 92b, 92c, 92e stets einen für die innere Temperatur der Turbomaschine 10 und der Antriebsvorrichtung 20 repräsentativen Messwert erreicht, muss ein minimaler Kühlmassenstrom im Antriebskühlpfad bzw. im jeweiligen Teilpfad 92b, 92c, 92e immer vorhanden sein. Das vollständige Schließen des Kühlventils 95 wird daher von der Regelungseinheit 100 verhindert. Würde das Kühlventil 95 vollständig schließen, könnte die Turbomaschine 10 oder die Antriebsvorrichtung im Inneren überhitzen, ohne dass sich die Temperaturen am Ausgang des Antriebskühlpfades 92 oder im Falle der beschriebenen Teilpfade 92b, 92c, 92e an den entsprechenden Ausgängen dieser Teilpfade 92b, 92c, 92e in relevantem Maß ändern.

Der Regelungseinheit 100 werden von der Steuereinheit 110 des Brennstoffzellensystems 1 den eingestellten Betriebszustand oder Betriebspunkt B des Brennstoffzellensystems 1 bzw. des vom Brennstoffzellensystem 1 angetriebenen Fahrzeugs angebende Signale zugeführt. Bei der Steuereinheit 110 kann es sich dabei gleichzeitig auch um die Steuereinheit des Fahrzeugs handeln.

Im Vergleich zu Figur 1 weist das erfindungsgemäße Brennstoffzellensystem 1 nach Figur 4 keinen separaten Bypasskanal 150 mit einem separaten Bypassventil 5 auf. Gemäß der erfindungsgemäßen Ausführungsform nach Figur 4 wird der Bypasskanal durch den Antriebskühlpfad 92 gebildet. Mit anderen Worten übernimmt der Antriebskühlpfad 92 zusätzlich zur Kühlung der Antriebsvorrichtung 20 und der Komponenten der Turbomaschine 10 auch die Funktion des Bypasskanals 150. Entsprechend übernimmt das Kühlventil 95 zusätzlich zur Einstellung der Solltemperatur des Kühlmassenstroms am Ausgang 125 des Antriebskühlpfades 92 auch die Funktion der Einstellung eines gewünschten Bypassmassenstroms. Mit anderen Worten übernimmt das Kühlventil 95 zusätzlich die Funktion des Bypassventils 5. Der Kühlmassenstrom nimmt somit gleichzeitig die Funktion des Bypassmassenstroms wahr.

Die Regelungseinheit 100 steuert das Kühlventil 95 primär so an, dass sich die zur Kühlung der Antriebsvorrichtung 20 und der Komponenten der Turbomaschine 10 erforderliche Solltemperatur am Ausgang 125 des Antriebskühlpfades 92 nach Möglichkeit einstellt. Mit anderen Worten soll zumindest die Kühlfunktion des Antriebskühlpfades 92 gewährleistet sein.

Anhand weiterer zugeführter Sensorsignale V ermittelt die Regelungseinheit 100 zusätzlich, ob der Verdichter 11 in den Pumpzustand gelangt ist, das sogenannte Verdichterpumpen. Dies kann zur Zerstörung des Verdichters 11 und damit zum Ausfall des Brennstoffzellensystems 1 führen und ist daher zu vermeiden. Die Detektion des Verdichterpumpens kann dabei in dem Fachmann bekannter Weise erfolgen, beispielsweise wie in DE 10 2012 224 052 A1 beschrieben. Ein Betrieb der Brennstoffzelle 2 bei hohen Drücken nahe der Pumpgrenze, ab der sich Verdichterpumpen einstellt, ist vorteilhaft und ermöglicht einen Betrieb des Verdichters 11 bei hohem Wirkungsgrad. Umso wichtiger ist die Detektion und Vermeidung des Verdichterpumpens beim Betrieb des Brennstoffzellensystems 1. Ziel ist somit ein Betrieb der Brennstoffzelle 2 bei hohen Drücken und kleinen Massenströmen des Arbeitsfluids. Dies kann durch die Bypassfunktion des Antriebskühlpfades 92 sichergestellt werden.

Wird also von der Regelungseinheit 100 anhand der empfangenen Sensorsignale V Verdichterpumpen detektiert, so wird das Kühlventil 95 von der Regelungseinheit 100 zur Einstellung eines Öffnungsgrades angesteuert, um einen gewünschten Bypassmassenstrom zur Vermeidung des Verdichterpumpens einzustellen. Dazu wird am Ausgang 125 des Antriebskühlpfades 92 mittels eines Massenstrommessgeräts 120, vorliegend beispielsweise eines Luftmassenmessers, der Istwert des Kühlmassenstroms am Ausgang 125 erfasst. Gemäß dem vorliegenden Beispiel ist das Massenstrommessgerät 120 ebenfalls Teil der Sensoreinheit 105. Der Istwert des Kühlmassenstroms wird dann ebenfalls über die Sensorsignale S der Regelungseinheit 100 mitgeteilt. Das Massenstrommessgerät 120 kann jedoch auch separat von der Sensoreinheit 105 angeordnet sein, beispielsweise am stromaufseitigen Ende des Antriebskühlpfades 92, um den Istwert des Kühlmassenstroms vor dem Eintritt in das Gehäuse 8 zu messen. Auf diese Weise wird sichergestellt, dass der gesamte Kühlmassenstrom erfasst wird, insbesondere bei Vorhandensein der Teilpfade 92b, 92c, 92e, da ja auch der gesamte stromab des Wärmestauschers 93 abgezweigte Kühlmassenstrom zur Bypassfunktion des Antriebskühlpfades 92 beiträgt.

Der jeweils gewünschte Bypassmassenstrom oder Soll-Bypassmassenstrom kann experimentell für verschiedene Betriebszustände oder Betriebspunkte des Brennstoffzellensystems 1 ermittelt und in einem Kennfeld in der Regelungseinheit 100 abgelegt worden sein. Er gewährleistet für den jeweiligen Betriebszustand die Vermeidung von Verdichterpumpen. Die Drosselcharakteristik des Antriebskühlpfades 92 wird so je nach Betriebszustand bzw. Betriebspunkt B des Brennstoffzellensystems 1 angepasst.

Die Regelungseinheit 100 bestimmt abhängig vom aktuellen Betriebszustand oder Betriebspunkt B des Brennstoffzellensystems 1 anhand des Kennfeldes den Soll-Bypassmassenstrom und führt den Istwert für den Kühlmassenstrom dem Soll-Bypassmassenstrom nach. Stellgröße ist der Öffnungsgrad des Kühlventils 95.

Die Regelungseinheit 100 führt somit sowohl eine Temperaturregelung als auch eine Regelung des Bypassmassenstroms durch.

Da die Regelungseinheit 100 in erster Linie die erforderliche Kühlung der Antriebsvorrichtung 20 und der Komponenten der Turbomaschine 10 gewährleisten soll, wird der aufgrund des eingestellten Öffnungsgrades des Kühlventils 95 sich ergebende Kühlmassenstrom mindestens so groß sein, dass die Soll-Temperatur am Ausgang 125 des Kühlmassenstroms nach Möglichkeit eingehalten werden kann. Durch die überlagerte Regelung des Bypassmassenstroms kann im Antriebskühlpfad 92 ein resultierender Kühlmassenstrom eingestellt werden, der größer als der zum Einstellen des Sollwertes für die Temperatur des Mediums am Ausgang des Antriebskühlpfades 92 erforderliche Massenstrom ist. Entweder wird der für die Einstellung der Solltemperatur erforderliche Massenstrom eingestellt oder, wenn der Soll-Bypassmassenstrom größer ist, der Soll-Bypassmassenstrom. Auf diese Weise wird neben der Einstellung der erforderlichen Kühlwirkung auch das Vermeiden des Verdichterpumpens sichergestellt. Der über das Kühlventil 95 eingestellte Massenstrom stellt sowohl die Einstellung der Solltemperatur als auch des zum Vermeiden des Verdichterpumpens gewünschten Bypassmassenstroms zur entsprechenden Druckbegrenzung sicher.

Ferner kann die Regelungseinheit 100 anhand des empfangenen Betriebszustandes bzw. Betriebspunktes B des Brennstoffzellensystems 1 erkennen, ob das Brennstoffzellensystem 1 in einem Betriebszustand liegt, in dem ein Durchströmen der Brennstoffzelle 2 mit Arbeitsfluid vermieden werden soll. Auch in diesem Fall steuert die Regelungseinheit 100 das Kühlventil 95 zur Einstellung eines Öffnungsgrades an, der zu einem Kühlmassenstrom führt, der gegebenenfalls den zur Einstellung der Solltemperatur für die erforderliche Kühlung der Antriebsvorrichtung 20 sich ergebenden Kühlmassenstrom überschreitet. Auf diese Weise wird neben der Einstellung der erforderlichen Kühlwirkung auch das Vermeiden eines Durchströmens der Brennstoffzelle 2 mit Arbeitsfluid sichergestellt. Dies kann beispielsweise durch vollständiges Öffnen des Kühlventils 95 erfolgen. Ein solcher Betriebszustand liegt beispielsweise dann vor, wenn die Funktion des Verdichters 11 zur Luftversorgung des Brennstoffzellensystems 1 getestet werden soll. Dabei geht es darum zu prüfen, ob durch den Verdichter 11 ausreichend Druck und Massenstrom bereitgestellt werden kann. Dabei sollte der Durchfluss von Arbeitsfluid durch die Brennstoffzelle 2 auch zum Schutz der Brennstoffzelle 2 im Falle eines eventuellen Fehlbetriebs des Verdichters 11 vermieden werden. Dies kann durch vollständiges Öffnen des Kühlventils 95 erreicht werden. Auch in diesem Fall stellt der über das Kühlventil 95 eingestellte Massenstrom sowohl die Einstellung der Solltemperatur als auch des für den vorliegenden Betriebszustand oder Betriebspunkt B des Brennstoffzellensystems 1 gewünschten Bypassmassenstroms bzw. Soll-Bypassmassenstroms sicher.

Durch den Antriebskühlpfad 92 wird die Brennstoffzelle 2, durch die das Arbeitsfluid normalerweise vollständig geführt wird, zu einem gewissen Teil oder ganz umgangen, da ein Teil des Arbeitsfluids stromab des Verdichters 11 vor dem Eintritt in die Brennstoffzelle 2 abgezweigt wird. Der Verdichter 11 kann dabei wie beschrieben in mindestens einem Betriebszustand betrieben werden, ohne Arbeitsfluid durch die Brennstoffzelle 2 zu fördern.

In Figur 5 ist ein Ablaufplan für einen beispielhaften Ablauf des beschriebenen erfindungsgemäßen Verfahrens zum Betrieb der Turbomaschine 10 bzw. des Brennstoffzellensystems 1 im Hinblick auf die Einstellung der Solltemperatur am Ausgang 125 des Antriebskühlpfades 92 und des Soll-Bypassmassenstroms dargestellt. Das Verfahren läuft in der Regelungseinheit 100 ab.

Nach dem Start des Programms wird bei einem Programmpunkt 200 der aktuelle Betriebszustand oder Betriebspunkt B des Brennstoffzellensystems 1 ermittelt. Danach wird zu einem Programmpunkt 205 verzweigt.

Bei Programmpunkt 205 wird anhand der Sensorsignale S die Isttemperatur am Ausgang 125 des Antriebskühlpfades 92 von der Regelungseinheit 100 empfangen und mit der Solltemperatur verglichen. Abhängig von der Differenz zwischen Solltemperatur und Isttemperatur wird der Öffnungsgrad des Kühlventils 95 eingestellt, um die Isttemperatur der Solltemperatur nachzuführen. Anschließend wird zu einem Programmpunkt 210 verzweigt.

Bei Programmpunkt 210 wird geprüft, ob der ermittelte Betriebszustand B eine Absenkung des Massenstroms des Arbeitsfluides durch die Brennstoffzelle 2 oder gar eine Unterbrechung dieses Massenstroms, beispielsweise für den beschriebenen Funktionstest des Verdichters 11 erfordert. Ist dies der Fall, so wird zu einem Programmpunkt 215 verzweigt, andernfalls wird zu einem Programmpunkt 230 verzweigt.

Bei Programmpunkt 215 wird ein erster Soll-Bypassmassenstrom ermittelt, um die erforderliche Absenkung des Massenstroms durch die Brennstoffzelle 2 zu realisieren. Anschließend wird zu einem Programmpunkt 220 verzweigt.

Bei Programmpunkt 220 wird anhand der Sensorsignale S der Istwert für den Kühlmassenstrom von der Regelungseinheit 100 empfangen und mit dem ermittelten ersten Soll-Bypassmassenstrom verglichen und geprüft, ob der erste Soll-Bypassmassenstrom kleiner als der Istwert für den Kühlmassenstrom ist. Ist dies der Fall, so wird zu Programmpunkt 230 verzweigt und die Ansteuerung des Kühlventils 95 unverändert beibehalten. Andernfalls wird zu einem Programmpunkt 225 verzweigt.

Bei Programmpunkt 225 wird der Öffnungsgrad des Kühlventils 95 erhöht, um den Istwert für den Kühlmassenstrom dem ersten Soll-Bypassmassenstrom nachzuführen. Im Beispiel des Funktionstests des Verdichters 11 wird das Kühlventil 95 vollständig geöffnet. Anschließend wird zu Programmpunkt 230 verzweigt.

Bei Programmpunkt 230 werden die weiteren Sensorsignale V auf das Vorliegen von Verdichterpumpen ausgewertet. Anschließend wird zu einem Programmpunkt 235 verzweigt.

Bei Programmpunkt 235 wird geprüft, ob Verdichterpumpen vorliegt. Ist dies der Fall, wird zu Programmpunkt 240 verzweigt, andernfalls wird das Programm verlassen und bei fortgesetztem Betrieb des Brennstoffzellensystems 1 erneut durchlaufen.

Bei Programmpunkt 240 wird ein zweiter Soll-Bypassmassenstrom beispielsweise wie beschrieben aus einem Kennfeld ermittelt, bei dem das Verdichterpumpen bei ausreichendem Abstand zur Pumpgrenze in einem sogenannten Sicherheitsbetrieb vermieden wird. Ein Betrieb nahe der Pumpgrenze wird in diesem Fall aus Sicherheitsgründen vorzugsweise nicht eingestellt. Anschließend wird zu einem Programmpunkt 245 verzweigt.

Bei Programmpunkt 245 wird anhand der Sensorsignale S der Istwert für den Kühlmassenstrom von der Regelungseinheit 100 empfangen und mit dem ermittelten zweiten Soll-Bypassmassenstrom verglichen und geprüft, ob der zweite Soll-Bypassmassenstrom kleiner als der Istwert für den Kühlmassenstrom ist. Ist dies der Fall, so wird das Programm verlassen und die Ansteuerung des Kühlventils 95 unverändert beibehalten. Andernfalls wird zu einem Programmpunkt 250 verzweigt.

Bei Programmpunkt 250 wird der Öffnungsgrad des Kühlventils 95 erhöht, um den Istwert für den Kühlmassenstrom dem zweiten Soll-Bypassmassenstrom nachzuführen. Anschließend wird das Programm verlassen.

Für den Fall, dass auf den separaten Bypasskanal 150 mit dem Bypassventil 5 nicht verzichtet werden soll, kommt für die Ansteuerung des Kühlventils 95 nur die beschriebene kennfeldbasierte Steuerung oder Temperaturregelung in Frage und im Ablaufplan nach Figur 5 würde das Programm nach Programmschritt 205 verlassen und anschließend bei fortgesetztem Betrieb des Brennstoffzellensystems 1 erneut durchlaufen.

Gemäß einem zweiten Ausführungsbeispiel des Brennstoffzellensystems 1 nach Figur 5, wobei gleiche Bezugszeichen gleiche Elemente kennzeichnen wie in den vorherigen Figuren mündet im Unterschied zum ersten Ausführungsbeispiel des Brennstoffzellensystems 1 nach Figur 4 der Antriebskühlpfad 92 nach Verlassen des Gehäuses 8 nicht stromab sondern stromauf der Abgasturbine 13 in die Abgasleitung 4. Dadurch wird der Kühlmassenstrom auf die Abgasturbine 13 zurückgeführt, so dass eine Rekuperation der Restenergie des Kühlmassenstroms ermöglicht wird. Dadurch sind im Vergleich zum ersten Ausführungsbeispiel nach Figur 4 jedoch nur geringere Druckgefälle und Massenströme über den Antriebskühlpfad 92 möglich.

## Patentansprüche

1. Turbomaschine (10), insbesondere für ein Brennstoffzellensystem (1), mit einem Verdichter (11), einer Antriebsvorrichtung (20) und einer Welle (14), wobei der Verdichter (11) ein auf der Welle (14) angeordnetes Laufrad (15), einen Verdichtereingang (11a) und einen Verdichterausgang (11b) aufweist, wobei ein Arbeitsfluid von dem Verdichtereingang (11a) zu dem Verdichterausgang (11b) förderbar ist, wobei an dem Verdichterausgang (11b) ein Antriebskühlpfad (92) zur Kühlung der Antriebsvorrichtung (20) abzweigt, wobei in dem Antriebskühlpfad (92) ein Kühlventil (95) angeordnet ist, wobei eine Regelungseinheit (100) vorgesehen ist, die einen Öffnungsgrad des Kühlventils (95) ansteuert, um einen Istwert der Temperatur des Mediums im Antriebskühlpfad (92), vorzugsweise im Bereich des stromabseitigen Endes des Antriebskühlpfads (92), einem Sollwert der Temperatur nachzuführen, **dadurch gekennzeichnet,**
**dass** der Antriebskühlpfad (92) einen an dem Verdichterausgang (11b) abzweigenden Bypasskanal (92), insbesondere zur Druckbegrenzung, bildet und dass das Kühlventil (95) ein in dem Bypasskanal (92) angeordnetes Bypassventil (95) bildet,
**dass** die Regelungseinheit (100) den Öffnungsgrad des Kühlventils (95) abhängig vom Sollwert für die Temperatur des Mediums im Antriebskühlpfad (92) und abhängig von einem gewünschten Bypassmassenstrom ansteuert.

2. Turbomaschine (10) nach Anspruch 1, **dadurch gekennzeichnet, dass** in dem Antriebskühlpfad (92) stromaufwärts der Antriebsvorrichtung (20) ein Wärmetauscher (93) angeordnet ist.

3. Turbomaschine (10) nach Anspruch 1 oder 2, **dadurch gekennzeichnet, dass** die Antriebsvorrichtung (20) einen Rotor (21) und einen Stator (22) aufweist, wobei der Rotor (21) auf der Welle (14) angeordnet ist, wobei der Antriebskühlpfad (92) durch einen Spalt zwischen dem Rotor (21) und dem Stator (22) führt.

4. Turbomaschine (10) nach einem der Ansprüche 1 bis 3, **dadurch gekennzeichnet, dass** die Welle (14) mittels zweier Radiallager (41, 42) gelagert ist, wobei die beiden Radiallager (41, 42) in dem Antriebskühlpfad (92) angeordnet sind.

5. Turbomaschine (10) nach Anspruch 4, **dadurch gekennzeichnet, dass** sich der Antriebskühlpfad (92) in einen ersten Teilpfad (92b) und in einen zweiten Teilpfad (92c) verzweigt, wobei ein Radiallager (41) in dem ersten Teilpfad (92b) und ein Radiallager (42) in dem zweiten Teilpfad (92c) angeordnet ist.

6. Turbomaschine (10) nach Anspruch 5, **dadurch gekennzeichnet, dass** die Welle (14) mittels eines Axiallagers (43) gelagert ist, wobei das Axiallager (43) in dem ersten Teilpfad (92b) angeordnet ist.

7. Turbomaschine (10) nach einem der Ansprüche 1 bis 4, **dadurch gekennzeichnet, dass** die Welle (14) mittels eines Axiallagers (43) und zumindest eines Radiallagers (41, 42) gelagert ist, wobei sich der Antriebskühlpfad (92) in einen ersten Teilpfad (92b) und in einen zweiten Teilpfad (92c) verzweigt, wobei das Axiallager (43) in dem ersten Teilpfad (92b) und das Radiallager (41, 42) in dem zweiten Teilpfad (92c) angeordnet ist.

8. Turbomaschine (10) nach Anspruch 5 oder 7, **dadurch gekennzeichnet, dass** in dem ersten Teilpfad (92b) - bevorzugt stromabwärts des Axiallagers (43) - ein Teilpfadventil (96) angeordnet ist.

9. Turbomaschine (10) nach einem der Ansprüche 1 bis 8, **dadurch gekennzeichnet, dass** gegenüberliegend zu einer Rückseite (15b) des Laufrads (15) eine Rückwand (89) als Teil eines Gehäuses (8) der Turbomaschine (10) angeordnet ist, wobei in der Rückwand (89) Entlüftungsbohrungen (88) ausgebildet sind, wobei die Entlüftungsbohrungen (88) in einem Radrückenkühlpfad (91) der Turbomaschine (10) angeordnet sind, welcher von dem Verdichterausgang (11b) abzweigt.

10. Turbomaschine (10) nach Anspruch 9, soweit dieser auf einen der Ansprüche 6 bis 8 rückbezogen ist, **dadurch gekennzeichnet, dass** der Radrückenkühlpfad (91) durch das Axiallager (43) führt.

11. Turbomaschine (10) nach Anspruch 9 oder 10, **dadurch gekennzeichnet, dass** die Welle (14) mittels zweier Radiallager (41, 42) gelagert ist, wobei sich der Antriebskühlpfad (92) in einen ersten Teilpfad (92b) und in einen zweiten Teilpfad (92c) verzweigt, wobei ein Radiallager (41) in dem ersten Teilpfad (92b) und ein Radiallager (42) in dem zweiten Teilpfad (92c) angeordnet ist, wobei der Radrückenkühlpfad (91) in den ersten Teilpfad (92b) mündet.

12. Turbomaschine (10) nach einem der Ansprüche 1 bis 11, **dadurch gekennzeichnet, dass** das Laufrad (15) als Radialläufer ausgeführt ist, wobei das Laufrad (15) auf seiner Vorderseite (15a) von einem Arbeitsfluid entlang eines Strömungspfads (16) durchströmbar ist, wobei der Strömungspfad (16) ein axiales Strömungsende (18) und ein radiales Strömungsende (17) umfasst.

13. Brennstoffzellensystem (1) mit einer Brennstoffzelle (2), einer Luftzuführungsleitung (3) zum Zuführen eines Oxidationsmittels in die Brennstoffzelle (2) und einer Abgasleitung (4) zum Abführen des Oxidationsmittels aus der Brennstoffzelle (2), **dadurch gekennzeichnet, dass** das Brennstoffzellensystem (1) eine Turbomaschine (10) nach einem der Ansprüche 1 bis 12 aufweist, wobei der Verdichter (11) in der Luftzuführungsleitung (3) angeordnet ist.

14. Brennstoffzellensystem (1) nach Anspruch 13, wobei das Brennstoffzellensystem (1) eine Abgasturbine (13) mit einem weiteren Laufrad (13a) aufweist, wobei das weitere Laufrad (13a) auf der Welle (14) angeordnet ist, wobei die Abgasturbine (13) in der Abgasleitung (4) angeordnet ist.

15. Brennstoffzellensystem (1) nach Anspruch 14, **dadurch gekennzeichnet, dass** der Antriebskühlpfad (92) stromauf der Abgasturbine (13) in die Abgasleitung (4) mündet.

16. Brennstoffzellensystem (1) nach Anspruch 14, **dadurch gekennzeichnet, dass** der Antriebskühlpfad (92) stromab der Abgasturbine (13) in die Abgasleitung (4) mündet.

17. Verfahren zum Betrieb einer Turbomaschine (10) nach einem der Ansprüche 1 bis 12, **dadurch gekennzeichnet, dass** der Öffnungsgrad des Kühlventils (95) von der Regelungseinheit (100) angesteuert wird, um abhängig von einem detektierten Verdichterpumpen einen gewünschten Bypassmassenstrom im Antriebskühlpfad (92) einzustellen, der größer als der zum Einstellen des Sollwertes für die Temperatur des Mediums im Antriebskühlpfad (92) erforderliche Massenstrom ist.

18. Verfahren zum Betrieb eines Brennstoffzellensystems (1) nach einem der Ansprüche 13 bis 16, **dadurch gekennzeichnet, dass** der Öffnungsgrad des Kühlventils (95) von der Regelungseinheit (100) angesteuert wird, um abhängig von einem gewünschten Betriebszustand des Brennstoffzellensystems (1) einen gewünschten Bypassmassenstrom im Antriebskühlpfad (92) einzustellen, der größer als der zum Einstellen des Sollwertes für die Temperatur des Mediums im Antriebskühlpfad (92) erforderliche Massenstrom ist.

## Claims

1. Turbomachine (10), in particular for a fuel cell system (1), with a compressor (11), a drive device (20), and a shaft (14), wherein the compressor (11) has an impeller (15) arranged on the shaft (14), a compressor inlet (11a), and a compressor outlet (11b), wherein a working fluid can be delivered from the compressor inlet (11a) to the compressor outlet (11b), wherein a drive cooling path (92) branches off at the compressor outlet (11b) in order to cool the drive device (20), wherein a cooling valve (95) is arranged in the drive cooling path (92), wherein a regulation unit (100) is provided which controls the degree of opening of the cooling valve (95) in order to adjust an actual value of the temperature of the medium in the drive cooling path (92), preferably in the region of the downstream end of the drive cooling path (92), to a target value of the temperature, **characterized in that** the drive cooling path (92) forms a bypass duct (92) which branches off at the compressor outlet (11b) and which serves in particular for pressure limitation, and **in that** the cooling valve (95) forms a bypass valve (95) arranged in the bypass duct (92), and **in that** the regulation unit (100) controls the degree of opening of the cooling valve (95) depending on the target value for the temperature of the medium in the drive cooling path (92) and depending on a desired bypass mass flow.

2. Turbomachine (10) according to Claim 1, **characterized in that** a heat exchanger (93) is arranged in the drive cooling path (92) upstream of the drive device (20).

3. Turbomachine (10) according to Claim 1 or 2, **characterized in that** the drive device (20) has a rotor (21) and a stator (22), wherein the rotor (21) is arranged on the shaft (14), wherein the drive cooling path (92) leads through a gap between the rotor (21) and the stator (22).

4. Turbomachine (10) according to one of Claims 1 to 3, **characterized in that** the shaft (14) is mounted by means of two radial bearings (41, 42), wherein the two radial bearings (41, 42) are arranged in the drive cooling path (92).

5. Turbomachine (10) according to Claim 4, **characterized in that** the drive cooling path (92) branches into a first partial path (92b) and into a second partial path (92c), wherein one radial bearing (41) is arranged in the first partial path (92b) and one radial bearing (42) is arranged in the second partial path (92c).

6. Turbomachine (10) according to Claim 5, **characterized in that** the shaft (14) is mounted by means of an axial bearing (43), wherein the axial bearing (43) is arranged in the first partial path (92b) .

7. Turbomachine (10) according to one of Claims 1 to 4, **characterized in that** the shaft (14) is mounted by means of an axial bearing (43) and at least one radial bearing (41, 42), wherein the drive cooling path (92) branches into a first partial path (92b) and into a second partial path (92c), wherein the axial bearing (43) is arranged in the first partial path (92b) and the radial bearing (41, 42) is arranged in the second partial path (92c).

8. Turbomachine (10) according to Claim 5 or 7, **characterized in that** a partial path valve (96) is arranged in the first partial path (92b), preferably downstream of the axial bearing (43).

9. Turbomachine (10) according to one of Claims 1 to 8, **characterized in that**, opposite a rear side (15b) of the impeller (15), there is arranged a rear wall (89) as part of a housing (8) of the turbomachine (10), wherein ventilation bores (88) are formed in the rear wall (89), wherein the ventilation bores (88) are arranged in an impeller rear cooling path (91) of the turbomachine (10) which branches off from the compressor outlet (11b).

10. Turbomachine (10) according to Claim 9, where this refers back to one of Claims 6 to 8, **characterized in that** the impeller rear cooling path (91) passes through the axial bearing (43).

11. Turbomachine (10) according to Claim 9 or 10, **characterized in that** the shaft (14) is mounted by means of two radial bearings (41, 42), wherein the drive cooling path (92) branches into a first partial path (92b) and into a second partial path (92c), wherein one radial bearing (41) is arranged in the first partial path (92b) and one radial bearing (42) is arranged in the second partial path (92c), wherein the impeller rear cooling path (91) opens into the first partial path (92b).

12. Turbomachine (10) according to one of Claims 1 to 11, **characterized in that** the impeller (15) takes the form of a radial rotor, wherein a working fluid can flow through the impeller (15) on its front side (15a), along a flow path (16), wherein the flow path (16) comprises an axial flow end (18) and a radial flow end (17).

13. Fuel cell system (1) with a fuel cell (2), an air feed line (3) for feeding an oxidizing agent into the fuel cell (2), and an exhaust gas line (4) for discharging the oxidizing agent from the fuel cell (2), **characterized in that** the fuel cell system (1) has a turbomachine (10) according to one of Claims 1 to 12, wherein the compressor (11) is arranged in the air feed line (3).

14. Fuel cell system (1) according to Claim 13, wherein the fuel cell system (1) has an exhaust gas turbine (13) with a further impeller (13a), wherein the further impeller (13a) is arranged on the shaft (14), wherein the exhaust gas turbine (13) is arranged in the exhaust gas line (4).

15. Fuel cell system (1) according to Claim 14, **characterized in that** the drive cooling path (92) opens into the exhaust gas line (4) upstream of the exhaust gas turbine (13).

16. Fuel cell system (1) according to Claim 14, **characterized in that** the drive cooling path (92) opens into the exhaust gas line (4) downstream of the exhaust gas turbine (13).

17. Method for operating a turbomachine (10) according to one of Claims 1 to 12, **characterized in that** the degree of opening of the cooling valve (95) is controlled by the regulation unit (100) in order to set, depending on a detected compressor surge, a desired bypass mass flow in the drive cooling path (92) which is greater than the mass flow required to set the target value for the temperature of the medium in the drive cooling path (92).

18. Method for operating a fuel cell system (1) according to one of Claims 13 to 16, **characterized in that** the degree of opening of the cooling valve (95) is controlled by the regulation unit (100) in order to set, depending on a desired operating state of the fuel cell system (1), a desired bypass mass flow in the drive cooling path (92) which is greater than the mass flow required to set the target value for the temperature of the medium in the drive cooling path (92).

## Revendications

1. Turbomachine (10), notamment pour un système de pile à combustible (1), comprenant un compresseur (11), un dispositif d'entraînement (20) et un arbre (14), le compresseur (11) présentant une roue mobile (15) agencée sur l'arbre (14), une entrée de compresseur (11a) et une sortie de compresseur (11b), un fluide de travail pouvant être acheminé de l'entrée de compresseur (11a) à la sortie de compresseur (11b), un chemin de refroidissement d'entraînement (92) pour le refroidissement du dispositif d'entraînement (20) partant en dérivation au niveau de la sortie de compresseur (11b), une soupape de refroidissement (95) étant agencée dans le chemin de refroidissement d'entraînement (92), une unité de régulation (100) étant prévue, qui commande un degré d'ouverture de la soupape de refroidissement (95), afin d'asservir une valeur réelle de la température du milieu dans le chemin de refroidissement d'entraînement (92), de préférence dans la zone de l'extrémité côté aval du chemin de refroidissement d'entraînement (92), à une valeur de consigne de la température, **caractérisé en ce que**
le chemin de refroidissement d'entraînement (92) forme un canal de contournement (92) partant en dérivation au niveau de la sortie de compresseur (11b), notamment pour limiter la pression, et **en ce que** la soupape de refroidissement (95) forme une soupape de contournement (95) agencée dans le canal de contournement (92),
**en ce que** l'unité de régulation (100) commande le degré d'ouverture de la soupape de refroidissement (95) en fonction de la valeur de consigne pour la température du milieu dans le chemin de refroidissement d'entraînement (92) et en fonction d'un débit massique de contournement souhaité.

2. Turbomachine (10) selon la revendication 1, **caractérisée en ce qu'**un échangeur de chaleur (93) est agencé dans le chemin de refroidissement d'entraînement (92) en amont du dispositif d'entraînement (20).

3. Turbomachine (10) selon la revendication 1 ou 2, **caractérisée en ce que** le dispositif d'entraînement (20) présente un rotor (21) et un stator (22), le rotor (21) étant agencé sur l'arbre (14), le chemin de refroidissement d'entraînement (92) passant à travers un espace entre le rotor (21) et le stator (22).

4. Turbomachine (10) selon l'une quelconque des revendications 1 à 3, **caractérisée en ce que** l'arbre (14) est supporté au moyen de deux paliers radiaux (41, 42), les deux paliers radiaux (41, 42) étant agencés dans le chemin de refroidissement d'entraînement (92).

5. Turbomachine (10) selon la revendication 4, **caractérisée en ce que** le chemin de refroidissement d'entraînement (92) se ramifie en un premier chemin partiel (92b) et en un deuxième chemin partiel (92c), un palier radial (41) étant agencé dans le premier chemin partiel (92b) et un palier radial (42) dans le deuxième chemin partiel (92c).

6. Turbomachine (10) selon la revendication 5, **caractérisée en ce que** l'arbre (14) est supporté au moyen d'un palier axial (43), le palier axial (43) étant agencé dans le premier chemin partiel (92b).

7. Turbomachine (10) selon l'une quelconque des revendications 1 à 4, **caractérisée en ce que** l'arbre (14) est supporté au moyen d'un palier axial (43) et d'au moins un palier radial (41, 42), le chemin de refroidissement d'entraînement (92) se ramifiant en un premier chemin partiel (92b) et en un deuxième chemin partiel (92c), le palier axial (43) étant agencé dans le premier chemin partiel (92b) et le palier radial (41, 42) dans le deuxième chemin partiel (92c).

8. Turbomachine (10) selon la revendication 5 ou 7, **caractérisée en ce qu'**une soupape de chemin partiel (96) est agencée dans le premier chemin partiel (92b), de préférence en aval du palier axial (43).

9. Turbomachine (10) selon l'une quelconque des revendications 1 à 8, **caractérisée en ce qu'**une paroi arrière (89) faisant partie d'un carter (8) de la turbomachine (10) est agencée en face d'un côté arrière (15b) de la roue mobile (15), des alésages d'aération (88) étant formés dans la paroi arrière (89), les alésages d'aération (88) étant agencés dans un chemin de refroidissement de dos de roue (91) de la turbomachine (10), qui part en dérivation à partir de la sortie de compresseur (11b).

10. Turbomachine (10) selon la revendication 9, dans la mesure où celle-ci se rapporte à l'une quelconque des revendications 6 à 8, **caractérisée en ce que** le chemin de refroidissement de dos de roue (91) passe à travers le palier axial (43).

11. Turbomachine (10) selon la revendication 9 ou 10, **caractérisée en ce que** l'arbre (14) est supporté au moyen de deux paliers radiaux (41, 42), le chemin de refroidissement d'entraînement (92) se ramifiant en un premier chemin partiel (92b) et en un deuxième chemin partiel (92c), un palier radial (41) étant agencé dans le premier chemin partiel (92b) et un palier radial (42) dans le deuxième chemin partiel (92c), le chemin de refroidissement de dos de roue (91) débouchant dans le premier chemin partiel (92b).

12. Turbomachine (10) selon l'une quelconque des revendications 1 à 11, **caractérisée en ce que** la roue mobile (15) est réalisée sous la forme d'un rotor radial, la roue mobile (15) pouvant être traversée sur son côté avant (15a) par un fluide de travail le long d'un chemin d'écoulement (16), le chemin d'écoulement (16) comprenant une extrémité d'écoulement axiale (18) et une extrémité d'écoulement radiale (17).

13. Système de pile à combustible (1) comprenant une pile à combustible (2), une conduite d'amenée d'air (3) pour l'amenée d'un oxydant dans la pile à combustible (2) et une conduite de gaz d'échappement (4) pour l'évacuation de l'oxydant hors de la pile à combustible (2), **caractérisé en ce que** le système de pile à combustible (1) présente une turbomachine (10) selon l'une quelconque des revendications 1 à 12, le compresseur (11) étant agencé dans la conduite d'amenée d'air (3).

14. Système de pile à combustible (1) selon la revendication 13, le système de pile à combustible (1) présentant une turbine à gaz d'échappement (13) comprenant une autre roue mobile (13a), l'autre roue mobile (13a) étant agencée sur l'arbre (14), la turbine à gaz d'échappement (13) étant agencée dans la conduite de gaz d'échappement (4).

15. Système de pile à combustible (1) selon la revendication 14, **caractérisé en ce que** le chemin de refroidissement d'entraînement (92) débouche en amont de la turbine à gaz d'échappement (13) dans la conduite de gaz d'échappement (4).

16. Système de pile à combustible (1) selon la revendication 14, **caractérisé en ce que** le chemin de refroidissement d'entraînement (92) débouche en aval de la turbine à gaz d'échappement (13) dans la conduite de gaz d'échappement (4).

17. Procédé d'exploitation d'une turbomachine (10) selon l'une quelconque des revendications 1 à 12, **caractérisé en ce que** le degré d'ouverture de la soupape de refroidissement (95) est commandé par l'unité de régulation (100) afin d'ajuster, en fonction d'un pompage de compresseur détecté, un débit massique de contournement souhaité dans le chemin de refroidissement d'entraînement (92), qui est supérieur au débit massique nécessaire pour ajuster la valeur de consigne pour la température du milieu dans le chemin de refroidissement d'entraînement (92).

18. Procédé d'exploitation d'un système de pile à combustible (1) selon l'une quelconque des revendications 13 à 16, **caractérisé en ce que** le degré d'ouverture de la soupape de refroidissement (95) est commandé par l'unité de régulation (100) afin d'ajuster, en fonction d'un état d'exploitation souhaité du système de pile à combustible (1), un débit massique de contournement souhaité dans le chemin de refroidissement d'entraînement (92), qui est supérieur au débit massique nécessaire pour ajuster la valeur de consigne pour la température du milieu dans le chemin de refroidissement d'entraînement (92) .
